# EUROPEAN PATENT APPLICATION

(11) **EP 4 826 274 A1**
(43) Date of publication of application: **21.10.2026**
(21) Application number: 26160987.9
(22) Date of filing: 26.02.2026
(51) Int. Cl.: F16G 15/06

(54) **A SECUREMENT DEVICE FOR A SHACKLE**

(30) Priority: 16.04.2025 AU 2025901324
(71) Applicant: Hughes-Gage, Duncan, 3146 Lilydale VIC (AU)
(72) Inventor: Hughes-Gage, Duncan, 3146 Lilydale VIC (AU)
(74) Representative: WSL Patentanwälte Partnerschaft mbB

(57) **Abstract**

A securement device for securing a shackle comprising: a first body portion including a slot adapted for receiving and retaining a head of a bolt of the shackle therewithin; a second body portion, adjoined to the first body portion, comprising a clip for removably attaching to a shank of the shackle, in use. A shackle assembly is also provided comprising a bolt, a shackle body and the securement device.

## Description

### Field of the invention

Disclosed herein are devices to be used for securing a shackle to prevent a shackle from coming undone, during use. In particular, the securement devices comprise pinrentention means for shackles designed to secure heavy loads. However, this device can be used with shackle types which have a U-shaped body and bolt or pin adapted to close the shackle.

### Background

A shackle typically is used as a connecting member between a load and lifting equipment. Shackles are attached to slings, hooks, or other lifting hardware and devices, allowing loads to be moved or supported safely. Shackles are typically used in rigging suspension systems.

Shackles are available in a range of sizes, materials and have different load capacities. Shackles are selected based on the mechanical requirements of the load and to keep in line with safety and compliance requirements.

Shackles typically consists of a U-shaped body. The u-shaped body extends from a first free end to a second free end. The U-shaped body defines an internal space and body for engaging with an aperture of a closure or a lifting hardware.

The shackle further comprise a pin which extends through and across the two ends to close the shackle. The shackle can be a screw pin type and the pin can have a thread which engages with an internal threaded portion of the shackle.

Over time and under load including bending, shear and vibrational loads, the pin can become loose from the shackle body and the shackle can open. This can cause heavy loads or rigging to be unsecured. Unsecured loads can fall apart and cause damage to surrounding people and equipment, posing a serious health and safety risk. The prevent shackles coming undone, they can be secured tightly, though under thermal expansion and contraction the pin can become locked to the shackle and difficult to remove.

Prior art pin retention devices are flimsy, ineffective or difficult to produce.

There is a need to address the above, and/or at least provide a useful alternative.

### Summary

According to a first aspect of the present invention, there is provided a securement device for securing a shackle comprising:
a first body portion including a slot adapted for receiving and retaining a head of a bolt of the shackle therewithin;
a second body portion, adjoined to the first body portion, comprising a clip for removably attaching to a shank of the shackle, in use.

The securement device may further comprise an outwardly projecting angled tab for angling off the clip, in use.

The slot may be elongated.

The clip may be located adjacent the head of the screw.

The clip may be a cylindrical clip.

The slot length may be less than the length of a major part of the head of the bolt.

The securement device may further comprise a concave recess adjacent the tab for receiving a thumb of user.

The securement device may be of unitary construction.

The securement device may be 3D printed.

The securement device may be made of a plastic.

The securement device may be made of a composite material.

The securement device may be made of a metal.

According to another aspect of the present invention, there is provided a shackle assembly comprising:
a bolt;
a shackle body extending from a first end to a second end, each end comprising an aperture therethrough and an internal threaded portion for receiving and securely engaging with the bolt, and
a securement device for securing a shackle comprising:
   a first body portion including a slot adapted for receiving and retaining a head of a bolt therewithin;
   a second body portion, adjoined to the first body portion, comprising a clip for removably attaching to a shank of the shackle, in use.

### Brief description of the drawings

An embodiment of the invention will now be described, by way of example only, with reference to the accompanying drawings in which:
Fig. 1 is a perspective view of a securement device in accordance with a preferred embodiment of the present invention;
Fig. 2 is an alternative perspective view of the securement device shown in Fig. 1;
Fig. 3 is a front view of the securement device shown in Fig. 1;
Fig. 4 is a perspective view of part of a shackle assembly in accordance with a preferred embodiment of the invention.

### Detailed description

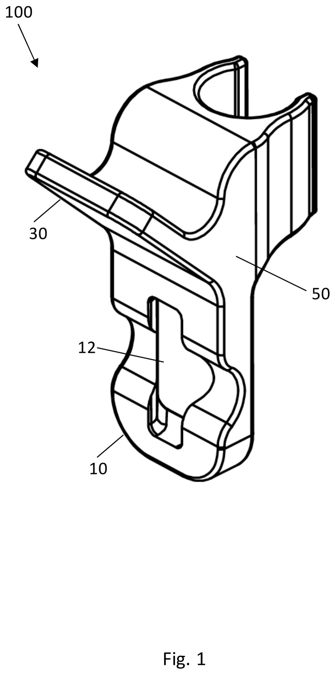

Figure 1 illustrates a securement device 100 for securing a shackle 1. The securement device 100 comprises a first body portion 10 including an aperture 12 adapted for receiving and retaining a head 4 of a bolt 2 of the shackle 1 therewithin. It also comprises a second body portion 50 adjoined to the first body portion 10. The second body portion 50 comprises a clip 22 for removably attaching to a shank of the shackle 1.

The shackle 1 can be a typical shackle 1 with a U-shaped shackle body 6 that is closed with a bolt 2, in use. The shackle 1 can be of any size and load capacity. The securement device 100 can be sized to fit a range of shackle sizes.

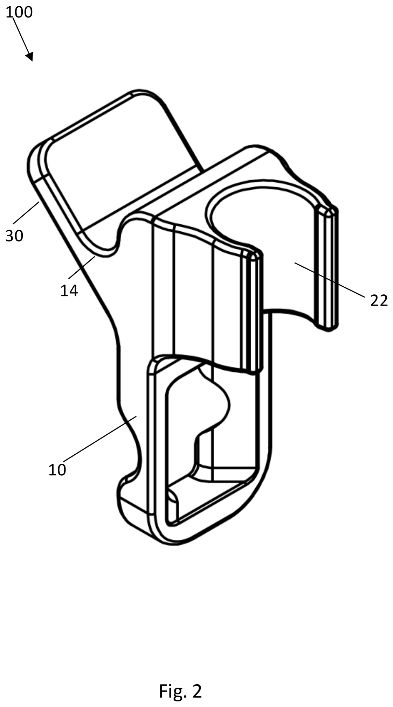

As can be seen in Figures 1 to 4 which illustrate a preferred embodiment, the securement device 100 is of unitary construction.

As mentioned, the device comprises a body. The body comprises a first body portion 10 which is adjoined to a second body portion 50. The first body portion 10 is adapted to engage with and retain the bolt 2 in a shackle assembly 200. In this embodiment, the first body portion 10 is substantially rectangular and extends from one end to the second body portion 50.

The first body portion 10 has an aperture 12 which extends through an entire thickness of the first body portion 10. The aperture 12 is adapted to receive and retain the head 4 of the bolt 2 therewithin. In this embodiment, the aperture 12 is an elongated slot 12.

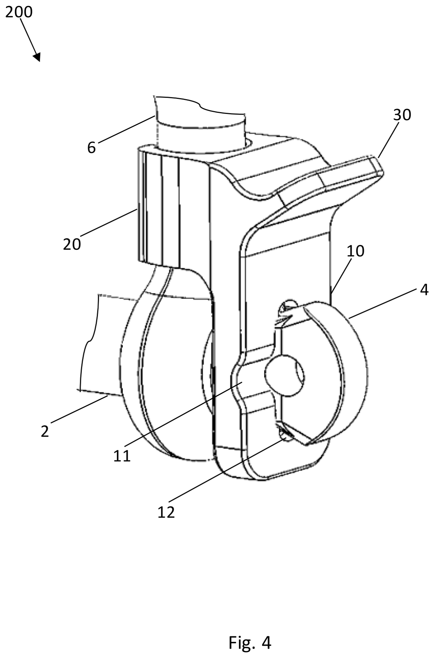

As can be seen in figure 4, the head 4 of the bolt 2 is thinner than the body of the bolt 2, transversely. The head 4 of the bolt 2 is also tapered longitudinally (along the direction that the bolt 2 body extends) comprising a major part 3 and a minor part at the neck of the head 4. In this embodiment, the bolt 2 also has a flange 5 located at the neck of the head 4 of the bolt 2.

A length of the slot 12 is shorter than a major part 3 of the length of the head 4 of the bolt 2 so that when the bolt 2 is fastened within the shackle body 6, it cannot move outwardly. The pin is located between the major part 3 of the head 4 and the flange 5 at the neck. In this way, if the bolt 2 loosens within the threaded portion, it cannot move outwardly as the first portion will abut against the flange 5. It also cannot move inwardly as the bolt 2 body which has a diameter greater than a width of the slot 12. As described below, the second body portion 50 is attached to the shank of the shackle body and as the first body portion 10 cannot move relative to the second body portion 50, the bolt 2 is retained within the shackle body 6.

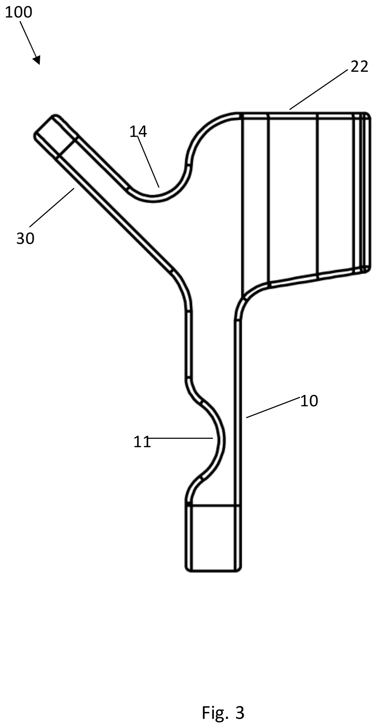

Figure 3 shows a front view of the securement device 100. The first body portion 10 has a concave portion 11 adjacent the aperture 12. As shown in figure 4, when the securement device 100 is secured onto the shackle 1, this is to allow access to an aperture 12 within the bolt head 4.

It is envisaged that in other embodiments, the aperture 12 in the first body portion 10 can be of any suitable size and shape that allows at least the head 4 of the bolt 2 to be retained within the aperture 12 of the first body portion 10. The aperture 12 can be configured to suit a range of differently shaped bolt heads.

The second body portion 50 extends upwardly from the first body portion 10 and is adapted to releasably attach to the shank of the shackle 1 adjacent the head 4 of the bolt 2. In this embodiment, the second body portion 50 comprises a cylindrical clip 22. The clip 22 has a central aperture 12 and a side opening. The clip 22 is made of a resiliently flexible yet sufficiently rigid material such that when it is pushed onto the shank, it snaps onto and around the shank to hold the shank within the aperture 12 through the opening. The clip 22 extends almost all the way around the shank. As the first body portion 10 is fixed to the second body portion 50, any outward movement of the first body portion 10 is prevented.

The clip 22 in this embodiment can snap onto the shank. It is envisaged that in other embodiments, there can be other means of releasably fastening the second body portion 50 to the shank of the shackle body 6. For example, the clip 22 can comprise a lever and tab 30 which when pressed opens up jaws which can be placed around the shank. The clip 22 can be fastened around the shank with fasteners such as screws or snapping portions which snap together. The clip 22 can comprise claws or a releasable hook such as that in a carabiner. The clip 22 can be sized to fit around and be secured to a range of differently sized shanks.

The securement device 100 further comprises an outwardly projecting angled tab 30. This helps the user remove the clip 22 from the shank as required. As can be seen in figure 3, then tab 30 extends at an angle of approximately 45 degrees from the vertical axis. In other embodiments the angle can be less than or more than 45 degrees. For example, in other embodiments, the angle can be 30 degrees, 35 degrees, 40 degrees, 50 degrees, 55 degrees or 60 degrees. The tab 30 is substantially rectangularly shaped.

The securement device 100 further comprises a concave recess 14 located between the tab 30 and the clip 22. The concave recess 14 is adapted to receive a thumb of a user when removing the clip 22. The recess is sized to allow an adult thumb to fit comfortably in the recess and apply pressure onto the tab 30 to lever off the clip 22 from the shank. The angle of the tab 30 can be selected to allow the recess to have sufficient room.

In this embodiment, the securement device 100 is solid. In other embodiments, an interior of the shackle 1 may be hollow or material may be removed to reduce the weight of the securement device 100.

The securement device 100 can be made of plastic or a composite material or a metal.

In other embodiments, the securement device 100 can be made of different materials. For example, the clip 22 can be made of a metal while the first body portion 10 can be made of a plastic material.

In an embodiment, the securement device 100 can be 3D printed as one piece. In other embodiments, the securement device 100 can be molded or extruded.

In another embodiment the securement device 100 can be made of different components that are fixed to each other.

Figure 4 illustrates a shackle assembly 200 in accordance with a preferred embodiment of the present invention. The shackle assembly 200 comprises a shackle body 6 extending from a first end to a second end, each end comprising an aperture 12 therethrough and an internal threaded portion for receiving and securely engaging with the bolt 2. The shackle assembly 200 includes a bolt 2. Figure 4 shows the bolt 2 located within the internal threaded portions of the shackle 1. The shackle assembly 200 also includes a securement device 100 as described above.

To assemble the device, the bolt 2 is inserted and secured within the shackle 1. The aperture 12 in the first body portion 10 is located at the head 4 of the bolt 2 and the first body portion 10 is pressed over the head 4 of the bolt 2 such that the first body portion 10 resiliently flexes to allow the head 4 of the bolt 2 through the slot 12. The first body portion 10 can do this as the area around the slot 12 is weakened to allow sufficient flexing. The parts adjacent the slot 12 can flex outwardly to accommodate the major part 3 of the head 4 and then will flex back into position once the first body portion 10 has moved to a narrower part of the head 4 towards the neck thus retaining the head of the bolt within the aperture.

The opening of the clip 22 of the second body portion 50 is pushed against the shank so that it is flexed open and allows the shank into the aperture 12 of the second body portion 50. The resilience of the clip 22 allows the clip 22 to snap and surround the shank.

Many modifications of the above embodiments will be apparent to those skilled in the art without departing from the scope of the present invention. For example, a variety of differently sized apertures 12 can be used to fit around and retain the head 4 of the bolt 2 and a range of different types of clips can be used to secure the second body portion 50 to the shank. The device may have a release mechanism to release the clip 22 from the shank.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integers or steps.

The reference in this specification to any prior publication (or information derived from it), or to any matter which is known, is not, and should not be taken as an acknowledgment or admission or any form of suggestion that that prior publication (or information derived from it) or known matter forms part of the common general knowledge in the field of endeavour to which this specification relates.

## Claims

1. A securement device for securing a shackle comprising:
a first body portion including a slot adapted for receiving and retaining a head of a bolt of the shackle therewithin;
a second body portion, adjoined to the first body portion, comprising a clip for removably attaching to a shank of the shackle, in use.

2. The securement device of claim 1 further comprising an outwardly projecting angled tab for angling off the clip, in use.

3. The securement device of claim 1 wherein the slot is elongated.

4. The securement device of claim 1 wherein the clip is located adjacent the head of the screw.

5. The securement device of claim 1 wherein the clip is a cylindrical clip.

6. The securement device of claim 1 wherein the slot length is less than the length of a major part of the head of the bolt.

7. The securement device of claim 2 further comprising a concave recess adjacent the tab for receiving a thumb of user.

8. The securement device of claim 1 wherein the securement device is of unitary construction.

9. The securement device of claim 1 wherein the securement device is 3D printed.

10. The securement device of claim 1 wherein the securement device is made of a plastic.

11. The securement device of claim 1 wherein the securement device is made of a composite material.

12. A shackle assembly comprising:
a bolt;
a shackle body extending from a first end to a second end, each end comprising an aperture therethrough and an internal threaded portion for receiving and securely engaging with the bolt, and
a securement device for securing a shackle comprising:
a first body portion including a slot adapted for receiving and retaining a head of a bolt therewithin;
a second body portion, adjoined to the first body portion, comprising a clip for removably attaching to a shank of the shackle, in use.
